# EUROPEAN PATENT SPECIFICATION

(11) **EP 4 675 582 B1**
(45) Date of publication and mention of the grant of the patent: **04.11.2026**
(21) Application number: 25180325.0
(22) Date of filing: 03.06.2025
(51) Int. Cl.: G06V 20/59, G06V 40/16, G06V 10/70, G06T 7/73

(54) **IMPROVING HEAD POSE PREDICTION USING HEAD ACCESSORY POSE**
VERBESSERUNG DER KOPFHALTUNGSVORHERSAGE UNTER VERWENDUNG DER KOPFZUBEHÖRHALTUNG
AMÉLIORATION DE LA PRÉDICTION DE POSE DE TÊTE À L'AIDE DE POSE D'ACCESSOIRE DE TÊTE

(30) Priority: 01.07.2024 US 202418760697
(43) Date of publication of application: 07.01.2026
(73) Proprietor: Distance Technologies Oy, 00530 Helsinki (FI)
(72) Inventor: Carlsson, Thomas, 00530 Helsinki (FI); Strandborg, Mikko, 00530 Helsinki (FI)
(74) Representative: Moosedog Oy

(56) References cited:
- WO-A2-2017/172984
- US-A1- 2008 285 801
- US-A1- 2019 026 540

## Description

### TECHNICAL FIELD

The present disclosure relates to systems for improving a head pose prediction using a head accessory pose. The present disclosure also relates to methods for improving a head pose prediction using a head accessory pose.

### BACKGROUND

Head pose predictions depend on an accuracy of detection of face landmark features of a user. If a user wears a head accessory (for example, such as a hat, a visor cap, a headset, a pair of glasses, or similar) that obscures at least some of her/his face landmark features, it potentially results in a degraded face landmark fitting, thereby deteriorating a quality of head pose prediction.

As a first example, a headphone with a large boom microphone may partially obscure a lower portion of the user's face, wherein the lower portion of the user's face includes corners of a mouth and certain points along a contour of cheeks and jaws. As a second example, a hat may at least partially obscure a top portion of the user's face, wherein the top portion of the user's face includes eyebrows, corners of eyes, and certain points along a contour of a forehead. As a third example, an aircraft headgear may obscure almost all face landmark features (for example, such as one or more of: the eyebrows, the corners of the eyes, a tip of a nose, the corners of the mouth, points along a contour of the face), depending on a coverage of the aircraft headgear. Likewise, other types of occupational safety gear (including at least one of: a helmet, a pair of safety glasses, a gas mask) may also obscure most of the face landmark features of the user. As a fourth example, a pair of glasses with a thick frame may obscure at least the corners of the eyes of the user. As much as such obscuring of the face landmark features of the user degrades the detection of the face landmark features, such obscuring is often unavoidable. This leads to a deterioration in the quality of the head pose prediction, and makes head pose prediction more difficult or even infeasible in some cases.

In an attempt to overcome this problem, some existing techniques (for example, such as motion capture techniques) employ wearable markers that are worn by a user, thereby allowing for tracking of a head pose of the user. Some other existing techniques employ wearable infrared light emitters that can be worn, for example, around ears of a user, thereby allowing for tracking a head pose of the user. However, such existing techniques require users to wear wearable markers or wearable infrared light emitters. As a result, such existing techniques are inconvenient and cumbersome to use.

Therefore, in light of the foregoing discussion, there exists a need to overcome the aforementioned drawbacks.

US 2008/285801 A1 (HEINZMANN JOCHEN [AU] ET AL) 20 November 2008 (2008-11-20) is a relevant prior art document.

### SUMMARY

The present disclosure seeks to provide a system and a method for tracking a head pose of a user in an accurate and reliable manner, without a need for wearable markers or wearable infrared light emitters. The aim of the present disclosure is achieved by a system and a method for improving a head pose prediction using a head accessory pose, as defined in the appended independent claims to which reference is made to. Advantageous features are set out in the appended dependent claims. Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a schematic diagram of a system for improving a head pose prediction using a head accessory pose, in accordance with an embodiment of the present disclosure;
FIG. 2 is a schematic diagram depicting a plurality of poses of a user's head as well as corresponding poses of a head accessory worn by the user;
FIG. 3 is another schematic diagram depicting a plurality of poses of a user's head and corresponding poses of another head accessory worn by the user; and
FIG. 4 depicts steps of a method for improving a head pose prediction using a head accessory pose, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system implemented in a vehicle, the system comprising:
at least one tracking camera that is employed to capture images of a user;
at least one sensor employed to sense at least one of: an acceleration, an orientation of the vehicle; and
at least one processor configured to:
   detect, in each image of a set of images captured during a given time period, at least one face landmark feature of a face of the user, and determine a position of the at least one face landmark feature;
   detect, in each image of the set, whether the user is wearing at least one head accessory; and
   when it is detected in a given image that the user is wearing at least one head accessory,
      determine a pose of the at least one head accessory in the given image; and
      determine a pose of a head of the user in the given image, based on the position of the at least one face landmark feature detected in the given image and the pose of the at least one head accessory in the given image,
further wherein the at least one processor is configured to:
   determine a change in the at least one of: the acceleration, the orientation of the vehicle;
   detect when the change in the at least one of: the acceleration, the orientation of the vehicle is larger than a predefined threshold; and
   when it is detected that the change in the at least one of: the acceleration, the orientation of the vehicle is larger than the predefined threshold, at least temporarily reduce a weightage of the pose of the at least one head accessory, when determining the pose of the head in the given image.

In a second aspect, an embodiment of the present disclosure provides a method comprising:
capturing a set of images of a user during a given time period, by employing at least one tracking camera implemented in a vehicle;
detecting, in each image of said set, at least one face landmark feature of a face of the user, and determining a position of the at least one face landmark feature;
detecting, in each image of said set, whether the user is wearing at least one head accessory; and
when it is detected in a given image that the user is wearing at least one head accessory,
   determining a pose of the at least one head accessory in the given image; and
   determining a pose of a head of the user in the given image, based on the position of the at least one face landmark feature detected in the given image and the pose of the at least one head accessory in the given image,
wherein the method further comprises:
sensing at least one of: an acceleration, an orientation of the vehicle, by employing at least one sensor;
determining a change in the at least one of: the acceleration, the orientation of the vehicle;
detecting when the change in the at least one of: the acceleration, the orientation of the vehicle is larger than a predefined threshold; and
when it is detected that the change in the at least one of: the acceleration, the orientation of the vehicle is larger than the predefined threshold, at least temporarily reducing a weightage of the pose of the at least one head accessory, when determining the pose of the head in the given image.

The present disclosure provides the aforementioned system and the aforementioned method that allow for improving an accuracy of a head pose prediction (namely, the accuracy with which the pose of the head is determined) by synergistically using the pose of the at least one head accessory in addition to the position of the at least one face landmark feature detected in the images. Moreover, in some cases where the at least one face landmark feature cannot be detected reliably (for example, due to a presence of a hair style that blocks many face landmark features of the user, or similar), the system and the method can be leveraged to detect the at least one head accessory and augment the head pose prediction based on the pose of the at least one head accessory. The aforementioned system and method of the present disclosure work in contradistinction to the prior art, where head pose predictions depend only on an accuracy of detection of the face landmark features of the user. Notably, in the prior art, if the user wears a head accessory (for example, such as a hat, a visor cap, a headset, a pair of glasses, or similar) that obscures at least some of her/his face landmark features, it results in a degraded face landmark fitting, thereby deteriorating the quality of the head pose prediction. In contradistinction to the prior art, the system and the method of the present disclosure synergistically utilise the pose of the at least one head accessory along with the position of the at least one face landmark feature detected in the images, to improve the accuracy of the head pose prediction.

The at least one processor controls an overall operation of the system. The at least one processor is communicably coupled to the at least one tracking camera. Optionally, the at least one processor is implemented as a processor of a computing device that is communicably coupled to the at least one tracking camera. Examples of the computing device include, but are not limited to, a laptop, a desktop, a tablet, a phablet, a personal digital assistant, a workstation, a console, and a display unit. Alternatively, optionally, the at least one processor is implemented as a cloud server (namely, a remote server) that provides a cloud computing service.

Pursuant to the present disclosure, the at least one tracking camera may comprise at least one of: at least one visible-light camera, at least one infrared (IR) camera, at least one depth camera. Examples of a given visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of a given depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of tracking cameras (for example, such as the at least one visible-light camera, the at least one IR camera, and the at least one depth camera) may be utilised. When different types of images captured by the various different types of tracking cameras are utilised, results obtained from one type of image can be used to refine results obtained from another type of image. Herein, these different types of images may be in the form of at least one of: visible-light images, IR images, depth images.

It will be appreciated that the at least one tracking camera is arranged to face the user, to facilitate tracking of the pose of the user's head. In this regard, the at least one tracking camera is arranged such that the images of the user represent a head of the user clearly irrespective of whether the user is wearing any head accessory. These images may also capture some other parts of the user's body and real-world objects in her/his surroundings. In some implementations, the set of images may comprise consecutive images. In other implementations, the set of images may comprise images that are selected from a sequence of images. This may be particularly implemented, for example, when some blurred images in the sequence of images may be discarded. Moreover, the given time period (during which the set of images is captured) is a short time period. The given time period may lie in a range from 1 second, 5 seconds, 30 seconds, or 1 minute up to 20 seconds, 1 minute, 2 minutes, 5 minutes, or 10 minutes.

Throughout the present disclosure, the term "pose" encompasses both a position and an orientation. A pose of the at least one tracking camera from which the set of images are captured is pre-known in a given coordinate space. Accordingly, the position of the at least one face landmark feature can be determined in the given coordinate space. In this regard, the position of the at least one face landmark feature can be determined as a relative position of the at least one face landmark feature with respect to the at least one tracking camera. Such a determination may be performed using any suitable well-known technique (for example, such as a coordinate geometry-based technique, a trigonometry-based technique, or similar).

The term "face landmark features" is a well-known term in the art, and refers to key points or landmarks on a face. Examples of the face landmark features include, but are not limited to, corners of eyes, eyebrows, a tip of a nose, corners of a mouth, and various points along contours of a face. When detecting the at least one face landmark feature, as many face landmark features that can be detected reliably are detected. In some cases, only one face landmark feature can be detected, for example when the user is wearing sunglasses and a face mask or similar. In other cases, more than one face landmark feature are typically detected. Such detection of face landmark features can be performed by extracting features from a given image and identifying face landmark features from amongst the extracted features, by utilising suitable well-known algorithms and/or machine learning models. As an example, some face landmark detection algorithms use convolutional neural networks (CNNs) to extract features from the image, identify face landmark features from amongst the features, and determine positions of the face landmark features relative to a remainder of the features.

Moreover, the pose of the at least one head accessory can also be determined in the given coordinate space. Both the detection of whether the user is wearing the at least one head accessory as well as the determination of the pose of the at least one head accessory depend on a type of the at least one head accessory. Optionally, in this regard, when detecting that the user is wearing the at least one head accessory, the at least one processor is configured to identify the type of the at least one head accessory. Such identification can be performed using any suitable well-known technique, for example, such as an object identification technique, an instance segmentation technique, or similar. Such techniques may utilise neural networks and deep learning models. It will be appreciated that the type of the at least one head accessory may be identified from amongst a plurality of types of head accessories that are already pre-defined.

Optionally, the plurality of types of head accessories are pre-defined to indicate whether a head accessory of a particular type is worn in at least one of following ways: over a head, around a forehead, over eyes, over a nose, over a mouth, over ears. As an example, a hat or a cap is worn over the head and at least partially around the forehead. As another example, a cap with a visor is worn around the forehead at least partially.

As yet another example, a pair of glasses, a pair of sunglasses, or similar is worn over the eyes. As still another example, an aircraft headgear is worn over the head and the ears, covering not only the forehead, but also the eyes, the nose and the mouth. As yet another example, a gas mask, an anti-pollution mask, or similar is worn over the nose and the mouth. As still another example, a headphone with a large boom microphone is worn over the head and the ears, while at least partially covering the mouth.

Alternatively or additionally, optionally, the plurality of types of head accessories are pre-defined to indicate how stably a head accessory of a particular type can be worn. Optionally, in this regard, the plurality of types of head accessories may be classified under following:
(i) a first stability type, wherein a head accessory of the first stability type does not reorient relative to the head of the user, when worn;
(ii) a second stability type, wherein a head accessory of the second stability type does not reorient relative to the head of the user on its own, when worn, but may be adjusted by the user; and
(iii) a third stability type, wherein a head accessory of the third stability type changes its shape and/or pose, when worn.

Examples of the head accessory of the first stability type include, but are not limited to, an aircraft headgear, an occupational safety gear, a gas mask, a pair of glasses, a pair of sunglasses, a pair of safety glasses, and a head-mounted display. The head accessory of the first stability type is typically worn stably throughout the given time period. On the other hand, the head accessory of the second stability type is worn stably at least a predefined percent of the given time period. The predefined percent may lie in a range of 50 percent to 90 percent. Examples of the head accessory of the second stability type include, but are not limited to, a hat, a cap with a visor, an anti-pollution mask, and a head phone with a large boom microphone. The head accessory of the third stability type cannot be worn stably, and therefore, cannot be reliably employed to determine the pose of the user's head. Examples of the head accessory of the third stability type include, but are not limited to, a Santa hat, a hat with a non-rigid top, and a hat with a dangling pom-pom.

As mentioned earlier, the determination of the pose of the at least one head accessory depends on the type of the at least one head accessory. In this regard, the pose of the at least one head accessory may be determined based on relative positions of various points on a contour of the at least one head accessory with respect to the at least one tracking camera. As an example, in a case where the at least one head accessory is identified to be a cap with a visor, the pose of the at least one head accessory can be determined based on relative positions of various points on a contour of the cap and the visor with respect to the at least one tracking camera. As another example, in a case where the at least one head accessory is identified to be a pair of glasses, the pose of the at least one head accessory can be determined based on relative positions of various points on a contour of a frame, a bridge and temples of the pair of glasses with respect to the at least one tracking camera. It will be appreciated that such pose tracking can be performed with a significantly high accuracy and precision, such that an error in determining the pose of the user's head may, for example, be minimised to within a tolerance range of approximately (+/-) 8 millimetres.

Optionally, the pose of the at least one head accessory is determined by utilising at least one neural network. In this regard, the at least one neural network is trained using images of various different head accessories. Moreover, optionally, the at least one neural network is trained to identify a type of a given head accessory. For this purpose, the at least one neural network is trained using images of different head accessories belonging to each of the plurality of types of head accessories. A confidence value for the pose of the at least one head accessory can be calculated based on a confidence value of a prediction of the at least one neural network.

Once the position of the at least one face landmark feature and the pose of the at least one head accessory are determined, the pose of the user's head can be determined accordingly. There are various ways to determine the pose of the user's head based on the position of the at least one face landmark feature and the pose of the at least one head accessory. These will be explained in detail now. However, it will be appreciated that if it is detected in the given image that the user is not wearing any head accessory, the pose of the head of the user in the given image is determined, based on the position of the at least one face landmark feature only. In such a case, the pose of the head can be determined using any suitable well-known technique.

In an embodiment, the at least one processor is configured to:
determine a face-landmark-based pose of the head in each image of the set, based on the position of the at least one face landmark feature detected in said image;
determine, for each image of the set, a mapping between the pose of the at least one head accessory and the face-landmark-based pose of the head;
detect when a change in said mapping across the images of the set is less than a predefined change threshold; and
determine the pose of the head in the given image, based on the position of the at least one face landmark feature detected in the given image and the pose of the at least one head accessory in the given image, only when it is detected that the change in the mapping across the images of the set is less than the predefined change threshold.

Throughout the present disclosure, the term "face-landmark-based pose of the head" refers to a pose of the user's head that has been determined based on the position of the at least one face landmark feature only. It will be appreciated that the face-landmark-based pose of the head can be determined for each image of the set, by utilising any suitable well-known technique in the art. When determining the pose of the head based on the face landmark features, relative positions of the face landmark features with respect to each other can be determined to check for symmetry therebetween. A confidence value for the face-landmark-based pose can be calculated based on a number of face landmark features that are detected and how symmetrically the face landmark features are fitting (based on assumptions specific to a layout of a human face).

Next, the mapping between the pose of the at least one head accessory and the face-landmark-based pose of the head is determined for the images of the set. This allows to check whether the pose of the at least one head accessory correlates with the face-landmark-based pose of the head across the images of the set, namely, during the given time period. Such a mapping can be determined using any suitable technique. As an example, the mapping can be determined and stored using a mathematical model. Such a mathematical model can be based on regression, a machine learning algorithm, or geometric transformations.

As an example, the mapping can be determined in a form of an inverse pose, wherein an inverse pose of the at least one head accessory is determined relative to the face-landmark-based pose of the head. In other words, the face-landmark-based pose is considered hierarchically as a "parent pose" from a 3D scene graph perspective, while the inverse pose of the at least one head accessory is determined relative to the parent pose. Optionally, in this regard, the mapping can be determined in a form of an inverted pose matrix. As an example, the inverted pose matrix may be a 4x4 matrix that when multiplied with the pose of the at least one head accessory yields the inverse pose of the at least one head accessory relative to the face-landmark-based pose of the head.

When it is detected that the change in said mapping across the images of the set is less than the predefined change threshold, it is considered that the pose of the at least one head accessory correlates well with the face-landmark-based pose of the head. Note that the change in the mapping is calculated repeatedly, and is considered for recent images in the set. Optionally, a plurality of images are selected, from amongst the set of images, where the confidence value of the face-landmark-based pose exceeds a first predefined threshold confidence, and the confidence value of the pose of the at least one head accessory exceeds a second predefined threshold confidence. The first predefined threshold confidence may be same as or different from the second predefined threshold confidence. As an example, the first predefined threshold confidence and the second predefined threshold confidence may be 0.4, wherein the confidence values range between 0 and 1. The change in said mapping can then be checked for the plurality of images that are selected according to the confidence values. It will be appreciated that the predefined change threshold can be expressed in terms of a percentage. The predefined change threshold could lie in a range of 2 percent to 10 percent; more optionally, in a range of 2 percent to 5 percent.

Accordingly, the pose of the head in the given image is determined, based on both the position of the at least one face landmark feature detected in the given image and the pose of the at least one head accessory in the given image, only when these correlate well. A technical benefit of this is that the pose of the head is determined accurately and reliably, based on the pose of the at least one head accessory, which itself has been determined accurately and reliably.

For illustration purposes only, there will now be considered experimental data related to three different example cases corresponding to three different stability types, namely, the first stability type, the second stability type and the third stability type. In a first example case of a first head accessory of the first stability type, the given time period was considered to be as short as 30 seconds, because mappings correlate well and readily for head accessories of the first stability type. From amongst the images captured during this given time period of 30 seconds, it was observed that both the confidence value of the face-landmark-based pose of the head and the confidence value of the pose of the at least one head accessory exceeded the first predefined threshold confidence and the second predefined threshold confidence (which were defined as 0.4 as an example), respectively, in images captured during approximately 17.3 seconds. Moreover, the change in the mapping between the pose of the at least one head accessory and the face-landmark-based pose of the head was also found to be less than the predefined change threshold (which was defined as 2 percent as an example), in spite of the user's head rotating by up to 37 degrees from an initial pose. Thus, it was concluded that in case of head accessories of the first stability type, the pose of the head can be determined accurately and reliably, based on the pose of the at least one head accessory and the face-landmark-based pose of the head.

In a second example case of a second head accessory of the second stability type, it was observed that both the confidence value of the face-landmark-based pose of the head and the confidence value of the pose of the at least one head accessory exceeded the first predefined threshold confidence and the second predefined threshold confidence, respectively, and the mappings correlated well for many minutes (for example, in a range of 15 minutes to 30 minutes, or even more) similarly to the first example case. However, it was observed that even though both the confidence value of the face-landmark-based pose of the head and the confidence value of the pose of the at least one head accessory exceeded the first predefined threshold confidence and the second predefined threshold confidence, respectively, the change in the mapping exceeded the predefined change threshold from time to time. This was primarily due to the user adjusting the second head accessory. In such cases, new mappings can be readily determined and utilised, thereby replacing old mappings. Thus, it was concluded that in case of head accessories of the second stability type, the pose of the head can still be determined accurately and reliably, based on the pose of the at least one head accessory and the face-landmark-based pose of the head.

In a third example case of a third head accessory of the third stability type, it was observed that even though the confidence value of the face-landmark-based pose of the head exceeded the first predefined threshold confidence, the confidence value of the pose of the at least one head accessory failed to exceed the second predefined threshold confidence repeatedly. Moreover, the mappings did not correlate well. Thus, it was concluded that in case of head accessories of the third stability type, the pose of the head cannot be determined accurately and reliably, based on the pose of the at least one head accessory.

Optionally, the at least one processor is configured to:
when it is detected that the change in the mapping across the images of the set is not less than the predefined change threshold, perform any one of:
determine the pose of the head in the given image, based only on the position of the at least one face landmark feature detected in the given image, or
reduce a weightage of the pose of the at least one head accessory, when determining the pose of the head in the given image.

When it is detected that the change in said mapping across the images of the set is not less than the predefined change threshold, it is considered that the pose of the at least one head accessory does not correlate well with the face-landmark-based pose of the head. Accordingly, in such a case, the pose of the head may be determined based only on the position of the at least one face landmark feature detected in the given image. In other words, the pose of the head may be determined without taking the pose of the at least one head accessory into account. Alternatively, the pose of the head may be determined based on the position of the at least one face landmark feature as well as the pose of the at least one head accessory; however, the weightage of the pose of the at least one head accessory in such determination may be reduced. A technical benefit of the aforementioned alternatives is that the accuracy and reliability of determining the pose of the head is not affected at all, or only affected to a small extent, by a potentially inaccurate and unreliable pose estimation of the at least one head accessory.

Optionally, a weightage of the face-landmark-based pose of the head for determining the pose of the head is initially assigned to be higher than the weightage of the pose of the at least one head accessory. As an example, a ratio of the weightage of the face-landmark-based pose of the head and the weightage of the pose of the at least one head accessory may be 4:1. In such a case, the confidence value of the pose of the at least one head accessory would need to be 4 times of the confidence value of the face-landmark-based pose of the head, in order to be considered of equal value when determining the pose of the head. Notably, the pose of the at least one head accessory is taken into consideration when determining the pose of the head, based on the weightage of the pose of the at least one head accessory, and the confidence value of the pose of the at least one head accessory. Likewise, the face-landmark-based pose of the head is taken into consideration when determining the pose of the head, based on the weightage of the face-landmark-based pose of the head, and the confidence value of the face-landmark-based pose of the head.

In the first example case of the first head accessory of the first stability type, it was observed that both the confidence value of the face-landmark-based pose of the head and the confidence value of the pose of the at least one head accessory exceeded the first predefined threshold confidence and the second predefined threshold confidence, respectively. However, the pose of the at least one head accessory has a very small contribution (for example, as low as 20 percent or similar) as compared to the face-landmark-based pose of the head when determining the pose of the head, because of a bias in favour of the face-landmark-based pose of the head (due to the higher weightage thereof). Consider, for example, a case where the user suddenly covers the face for a sneeze, thereby causing most face landmark features to be obscured for a time period of a few seconds. During this time period, the confidence value of the face-landmark-based pose of the head would decrease drastically; however, the mapping between the pose of the at least one head accessory and the face-landmark-based pose of the head would continue to apply. As the confidence value of the pose of the at least one head accessory is unaffected during this time period, and exceeds the second predefined threshold confidence, the pose of the at least one head accessory starts to contribute more (for example, up to 70 percent, or even as high as 90 percent during the moment of the sneeze) when determining the pose of the head. Now, as the user removes an occluding hand and the face landmark features become visible again, the face-landmark-based pose of the head regains its prominence when determining the pose of the head.

Similarly, in the second example case of the second head accessory of the second stability type, it was observed that both the confidence value of the face-landmark-based pose of the head and the confidence value of the pose of the at least one head accessory exceeded the first predefined threshold confidence and the second predefined threshold confidence, respectively. In this case also, the pose of the at least one head accessory has a very small contribution (for example, as low as 20 percent or similar) as compared to the face-landmark-based pose of the head when determining the pose of the head, because of a bias in favour of the face-landmark-based pose of the head (due to the higher weightage thereof). Consider, for example, a case where the user adjusts the second head accessory. In such a case, the change in the mapping exceeds the predefined change threshold. Accordingly, the weightage of the pose of the at least one head accessory is reduced, such that it does not contribute much when determining the pose of the head. However, an exception to this case is when no face landmark feature is identifiable, for example, due to being obscured momentarily.

Moreover, in an embodiment, the at least one processor is configured to:
determine a face-landmark-based pose of the head in each image of the set, based on the position of the at least one face landmark feature detected in said image;
determine, for each image of the set, a mapping between the pose of the at least one head accessory and the face-landmark-based pose of the head;
generate a correspondence model based on the mapping determined for each image of the set;
detect when a mapping determined for a next image deviates from the correspondence model by more than a predefined deviation threshold; and
when it is detected that the mapping determined for the next image deviates from the correspondence model by more than the predefined deviation threshold, perform any one of:
   determine the pose of the head in the next image, based only on at least one face landmark feature detected in the next image, or
   reduce a weightage of the pose of the at least one head accessory, when determining the pose of the head in the next image.

As mentioned earlier, the face-landmark-based pose of the head can be determined for each image of the set, by utilising any suitable well-known technique in the art. Additionally, the confidence value for the face-landmark-based pose can be calculated. Next, the mapping between the pose of the at least one head accessory and the face-landmark-based pose of the head is determined for the images of the set, as described earlier. The correspondence model may be generated when a predefined number of mappings have been determined. As an example, the predefined number may be 10 or more. It will be appreciated that the correspondence model may be generated from mappings of those image for which the confidence value of the face-landmark-based pose exceeds the first predefined threshold confidence, and the confidence value of the pose of the at least one head accessory exceeds the second predefined threshold confidence.

As the correspondence model is generated based on the mappings determined for the images of the set, it is representative of how well the pose of the at least one head accessory correlates (namely, corresponds) with the face-landmark-based pose of the head across the images of the set, namely, during the given time period. In other words, the correspondence model represents how the face-landmark-based pose of the head and the pose of the at least one head accessory relate to each other. The correspondence model also represents confidence values of the pose of the at least one head accessory. This allows to adjust the weightage of the pose of the at least one head accessory that is to be considered when determining the pose of the head. Notably, the confidence value of the pose of the at least one head accessory depends on the type of the at least one head accessory. A first head accessory of the first stability type would typically have a higher confidence value than a second head accessory of the second stability type, while a third head accessory of the third stability type would typically have a lowest confidence value.

It will be appreciated that the correspondence model can be generated using any suitable technique. As an example, the correspondence model can be generated using a mathematical model. Such a mathematical model may be based on regression, machine learning algorithm(s), or geometric transformations.

When it is detected that the mapping determined for the next image does not deviate from the correspondence model by more than the predefined deviation threshold, it is considered that the pose of the at least one head accessory correlates well with the face-landmark-based pose of the head. In this regard, the predefined change threshold can be expressed in terms of a percentage. The predefined change threshold could lie in a range of 2 percent to 10 percent; more optionally, in a range of 2 percent to 5 percent. Accordingly, the pose of the head in the given image is determined, based on both the position of the at least one face landmark feature detected in the given image and the pose of the at least one head accessory in the given image, only when it is detected that the mapping determined for the next image does not deviate from the correspondence model by more than the predefined deviation threshold. A technical benefit of this is that the pose of the head is determined accurately and reliably, based on the pose of the at least one head accessory, which itself has been determined accurately and reliably.

On the other hand, when it is detected that the mapping determined for the next image deviates from the correspondence model by more than the predefined deviation threshold, it is considered that the pose of the at least one head accessory does not correlate well with the face-landmark-based pose of the head. Accordingly, in such a case, the pose of the head may be determined based only on the position of the at least one face landmark feature detected in the given image. In other words, the pose of the head may be determined without taking the pose of the at least one head accessory into account. Alternatively, the pose of the head may be determined based on the position of the at least one face landmark feature as well as the pose of the at least one head accessory; however, the weightage of the pose of the at least one head accessory in such determination may be reduced, as described earlier. A technical benefit of the aforementioned alternatives is that the accuracy and reliability of determining the pose of the head is not affected at all, or only affected to a small extent, by a potentially inaccurate and unreliable pose estimation of the at least one head accessory.

It will be appreciated that the same correspondence model can be used as long as the at least one head accessory is worn stably during the given time period, namely without being reoriented relative to the user's head. The correspondence model may be updated from time to time, or a new correspondence model may be generated, for example, when the user re-adjusts the at least one head accessory, thereby reorienting the at least one head accessory relative to the user's head. Optionally, in this regard, an offset error between the correspondence model and one or more new mappings is determined repeatedly. If the offset error is repeatedly detected to be greater than a predefined threshold error, then the correspondence model is updated, or a new correspondence model is generated.

Moreover, different correspondence models can be generated for different head accessories. As an example, if the user is wearing two head accessories (for example, such as a pair of sunglasses and a hat), two separate correspondence models may be generated. It will be appreciated that if multiple head accessories belonging to a same stability type (namely, either the first stability type, or the second stability type) are worn by the user, a common correspondence model can be generated for these multiple head accessories. This is particularly beneficial when the multiple head accessories belong to the first stability type. This is because head accessories belonging to the first stability type are least likely to be reoriented and are typically worn stably. However, if a first head accessory belongs to the first stability type, while a second head accessory belongs to the second stability type, two separate correspondence models can be beneficially generated. A technical benefit of this is that when the second head accessory is reoriented during use, only a second correspondence model for the second head accessory is required to be updated, and there is no need to update a first correspondence model for the first head accessory.

Furthermore, in an embodiment, the at least one processor is configured to:
when it is detected that the user is wearing the at least one head accessory,
identify a type of the at least one head accessory being worn by the user;
determine a list of face landmark features that are likely to be obscured by the at least one head accessory, based on the type of the at least one head accessory; and
adjust, based on the list of face landmark features that are likely to be obscured, a weightage of the at least one face landmark feature, when determining the pose of the head in the given image.

As mentioned earlier, the type of the at least one head accessory can be identified using any suitable well-known technique, for example, such as an object identification technique, an instance segmentation technique, or similar. Such techniques may utilise neural networks and deep learning models. Moreover, the type of the at least one head accessory may be identified from amongst the plurality of types of head accessories that are already pre-defined. In this regard, the plurality of types of head accessories can be pre-defined to indicate whether a head accessory of a particular type is worn in at least one of following ways: over a head, around a forehead, over eyes, over a nose, over a mouth, over ears. This allows to determine the list of face landmark features that are likely to be obscured by the at least one head accessory. Such a determination can be performed using at least one neural network.

As an example, a hat or a cap could at least partially obscure one or more of: at least one eyebrow, at least one corner of at least one eye, certain points along a contour of the forehead. As another example, a pair of glasses with a thick frame could obscure at least one corner of at least one eye. As yet another example, an aircraft headgear typically obscures the ears, the eyebrows, the corners of the eyes, the tip of the nose, the corners of the mouth, and several points on a contour of the face. As still another example, a gas mask or an anti-pollution mask typically obscures the tip of the nose and the corners of the mouth. As yet another example, a headphone with a large boom microphone may obscure at least one corner of the mouth.

Accordingly, the weightage of the at least one face landmark feature can be adjusted, based on the list of face landmark features that are likely to be obscured. In this regard, a weightage of a given face landmark feature can be decreased if the given face landmark feature is included in the list, because it is likely to be obscured in the given image. On the other hand, the weightage of the given face landmark feature can be increased if the given face landmark feature is not included in the list. Such an adjustment of the weightage of the at least one face landmark feature allows to improve an accuracy of face landmark fitting. The face landmark fitting may be performed using any suitable well-known technique, which may, for example, utilise neural networks and deep learning models.

Moreover, in an embodiment, the at least one processor is configured to:
detect when no face landmark feature of the face is identifiable in an image, but the user is wearing the at least one head accessory; and
when it is detected that no face landmark feature of the face is identifiable in the image, but the user is wearing the at least one head accessory,
   determine the pose of the at least one head accessory in the image; and
   determine the pose of the head in the image, based on the pose of the at least one head accessory in the image.

A technical benefit of this is that the pose of the head can be determined even when no face landmark feature is identifiable in an image. This can be leveraged to advantage in a case where the at least one head accessory belongs to either the first stability type or the second stability type. This is because head accessories belonging to the first stability type are least likely to be reoriented and are typically worn stably. Similarly, head accessories belonging to the second stability type are also less likely to reorient on their own and are typically reoriented only when the user readjust them. Thus, if a correspondence model (representing how the face-landmark-based pose of the head and the pose of the at least one head accessory relate to each other) has been generated, and it is detected that mappings determined for recent images have not deviated from the correspondence model by more than the predefined deviation threshold, the pose of the head can be determined based on the pose of the at least one head accessory in the image, when no face landmark feature is identifiable in the image. Similarly, if it is detected that mappings (determined between the pose of the at least one head accessory and the face-landmark-based pose of the head across the images of the set) have not changed or have changed less than the predefined change threshold, the pose of the head can be determined based on the pose of the at least one head accessory in the image, when no face landmark feature is identifiable in the image.

It will be appreciated that there could be various reasons why no face landmark feature is identifiable in the image. One possible reason could be that the user may be sneezing or making another gesture, whereby the user is covering her/his face momentarily. Such momentary covering of the user's face may have led to no face landmark feature being identifiable in the image. Another possible reason could be that the user is wearing an aircraft headgear (or another similar occupational safety gear, or similar) that is obscuring almost all face landmark features, depending on a coverage of the aircraft headgear. Such a case may be considered as a special case, because face landmark features would be consistently never trackable from any direction. In such cases, the at least one head accessory (namely, the aircraft headgear or similar) itself can be considered as a primary pose predictor, while the face landmark features can be considered as a secondary pose predictor. Accordingly, the weightage of the pose of the at least one head accessory can be increased, while the weightage of the at least one face landmark feature can be decreased (that is, the weightage of the face-landmark-based pose of the head can be decreased).

Furthermore, optionally, the system further comprises at least one IR light emitter that is employed to emit IR light, the at least one tracking camera comprising at least one IR camera, wherein the at least one processor is configured to:
detect, in a given IR image captured using the at least one IR camera, a reflection of the IR light off a reflective surface of the at least one head accessory, and determine at least one of: a position, a shape of the reflection; and
determine the pose of the head, based further on the at least one of: the position, the shape of the reflection.

A technical benefit of this is that the pose of the head can be determined more accurately and reliably by utilising the at least one of: the position, the shape of the reflection, in addition to the pose of the at least one head accessory. This can be leveraged to advantage in a case where the at least one head accessory has the reflective surface, and belongs to either the first stability type or the second stability type. As an example, the at least one head accessory could be a hard hat having a reflective plastic surface. It will be appreciated that the position of the reflection can be determined relative to certain points on the contour of the at least one head accessory.

Optionally, in this regard, an additional mapping is determined between the pose of the at least one head accessory and the at least one of: the position, the shape of the reflection. The additional mapping is determined by utilising the given IR image and a corresponding image of the set that is captured simultaneously with the given IR image. It will be appreciated that the at least one IR camera may be employed to capture a set of IR images. The additional mapping can be determined for each IR image of said set.

Optionally, the pose of the at least one head accessory (determined in the given image) is refined based on the at least one of: the position, the shape of the reflection. Such refining can be performed by utilising the additional mapping between the pose of the at least one head accessory and the at least one of: the position, the shape of the reflection. This allows for correcting any errors in determining the pose of the at least one head accessory. This, in turn, allows to determine the pose of the head more accurately and reliably.

Moreover, the system is implemented in a vehicle, the system further comprising at least one sensor employed to sense at least one of: an acceleration, an orientation of the vehicle, wherein the at least one processor is configured to:
determine a change in the at least one of: the acceleration, the orientation of the vehicle;
detect when the change in the at least one of: the acceleration, the orientation of the vehicle is larger than a predefined threshold; and
when it is detected that the change in the at least one of: the acceleration, the orientation of the vehicle is larger than the predefined threshold, at least temporarily reduce a weightage of the pose of the at least one head accessory, when determining the pose of the head in the given image.

A technical benefit of at least temporarily reducing the weightage of the pose of the at least one head accessory upon such a detection is that the accuracy of the determination of the pose of the head is not compromised when the at least one head accessory is reoriented with respect to the user's head, for example, due to a sudden jerk or a drastic change. Notably, any change in the at least one of: the acceleration, the orientation of the vehicle that is larger than the predefined threshold could affect a placement of the at least one head accessory relative to the user's head. As the at least one sensor is employed to sense the at least one of: the acceleration, the orientation of the vehicle repeatedly, it is possible to detect when the change in the at least one of: the acceleration, the orientation exceeds the predefined threshold. Optionally, when a dot product between a current vector indicative of the at least one of: the acceleration, the orientation of the vehicle at a current time instant, and a previous vector indicative of the at least one of: the acceleration, the orientation of the vehicle at a previous time instant lies outside a range of 0.9 to 1.1, it is detected that the change in the at least one of: the acceleration, the orientation of the vehicle is larger than the predefined threshold. It will be appreciated that the current vector and the previous vector may also include a gravity acceleration vector. It will also be appreciated that by "at least temporarily", it is meant the weightage may be reduced, for example, until a new correspondence model is generated.

Optionally, the at least one sensor comprises at least one of: at least one accelerometer, at least one gyroscopic sensor. Optionally, the at least one sensor further comprises at least one magnetometer. The at least one accelerometer could be employed to sense changes in the acceleration of the vehicle. The at least one gyroscopic sensor could be employed to sense changes in the orientation of the vehicle (for example, such as in terms of pitch, roll and yaw angles). The at least one magnetometer could be employed to sense changes in the orientation of the vehicle relative to the Earth's magnetic field. It will be appreciated that the at least one accelerometer and the at least one gyroscopic sensor, and optionally, the at least one magnetometer could be parts of an inertial measurement unit (IMU) or a triaxial inertial measurement unit (TIMU). Accelerometers, gyroscopic sensors, magnetometers, IMUs, and TIMUs are well-known in the art.

The present disclosure also relates to the method as described above. Various embodiments and variants disclosed above, with respect to the aforementioned first aspect, apply *mutatis mutandis* to the method.

In an embodiment, the method further comprises:
determining a face-landmark-based pose of the head in each image of the set, based on the position of the at least one face landmark feature detected in said image;
determining, for each image of the set, a mapping between the pose of the at least one head accessory and the face-landmark-based pose of the head;
detecting when a change in said mapping across the images of the set is less than a predefined change threshold; and
determining the pose of the head in the given image, based on the position of the at least one face landmark feature detected in the given image and the pose of the at least one head accessory in the given image, only when it is detected that the change in the mapping across the images of the set is less than the predefined change threshold.

Optionally, in this regard, the method further comprises:
when it is detected that the change in the mapping across the images of the set is not less than the predefined change threshold, perform any one of:
determining the pose of the head in the given image, based only on the position of the at least one face landmark feature detected in the given image, or
reducing a weightage of the pose of the at least one head accessory, when determining the pose of the head in the given image.

Moreover, in an embodiment, the method further comprises:
determining a face-landmark-based pose of the head in each image of the set, based on the position of the at least one face landmark feature detected in said image;
determining, for each image of the set, a mapping between the pose of the at least one head accessory and the face-landmark-based pose of the head;
generating a correspondence model based on the mapping determined for each image of the set;
detecting when a mapping determined for a next image deviates from the correspondence model by more than a predefined deviation threshold; and
when it is detected that the mapping determined for the next image deviates from the correspondence model by more than the predefined deviation threshold, perform any one of:
   determining the pose of the head in the next image, based only on at least one face landmark feature detected in the next image, or
   reducing a weightage of the pose of the at least one head accessory, when determining the pose of the head in the next image.

Furthermore, optionally, the method further comprises:
when it is detected that the user is wearing the at least one head accessory,
identifying a type of the at least one head accessory being worn by the user;
determining a list of face landmark features that are likely to be obscured by the at least one head accessory, based on the type of the at least one head accessory; and
adjusting, based on the list of face landmark features that are likely to be obscured, a weightage of the at least one face landmark feature, when determining the pose of the head in the given image.

Moreover, optionally, the method further comprises:
detecting when no face landmark feature of the face is identifiable in an image, but the user is wearing the at least one head accessory; and
when it is detected that no face landmark feature of the face is identifiable in the image, but the user is wearing the at least one head accessory,
   determining the pose of the at least one head accessory in the image; and
   determining the pose of the head in the image, based on the pose of the at least one head accessory in the image.

Furthermore, optionally, the at least one tracking camera comprises at least one infrared (IR) camera, wherein the method further comprises:
capturing a given IR image using the at least one IR camera, whilst emitting IR light by employing at least one IR light emitter;
detecting, in the given IR image, a reflection of the IR light off a reflective surface of the at least one head accessory, and determining at least one of: a position, a shape of the reflection; and
determining the pose of the head, based further on the at least one of: the position, the shape of the reflection.

Moreover, the at least one tracking camera is implemented in a vehicle, wherein the method further comprises:
sensing at least one of: an acceleration, an orientation of a vehicle, by employing at least one sensor;
determining a change in the at least one of: the acceleration, the orientation of the vehicle;
detecting when the change in the at least one of: the acceleration, the orientation of the vehicle is larger than a predefined threshold; and
when it is detected that the change in the at least one of: the acceleration, the orientation of the vehicle is larger than the predefined threshold, at least temporarily reducing a weightage of the pose of the at least one head accessory, when determining the pose of the head in the given image.

### DETAILED DESCRIPTION OF THE DRAWINGS

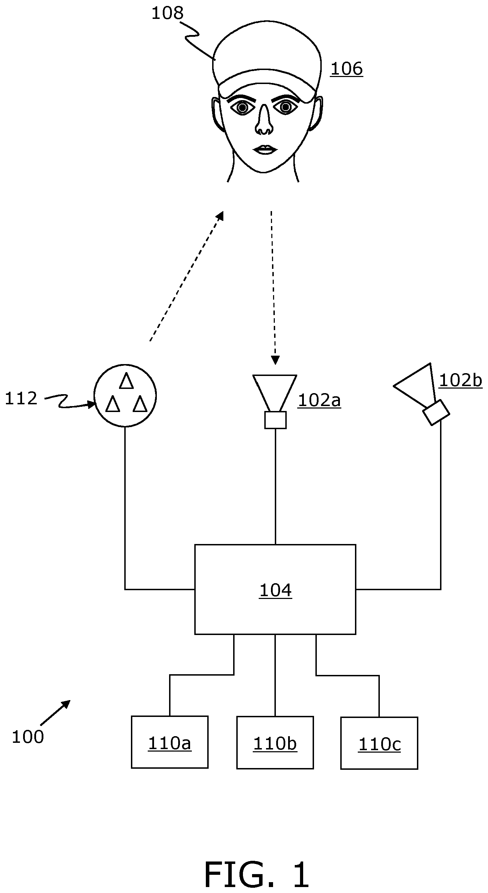

Referring to FIG. 1, illustrated is a schematic diagram of a system **100** for improving a head pose prediction using a head accessory pose, in accordance with an embodiment of the present disclosure. The system **100** comprises at least one tracking camera (depicted as tracking cameras **102a** and **102b),** and at least one processor (depicted as a processor **104**). The tracking cameras **102a** and **102b** are employed to capture images of a user **106** (shown only partially, for the sake of simplicity). The processor **104** is configured to:
detect, in each image of a set of images captured during a given time period, at least one face landmark feature of a face of the user **106,** and determine a position of the at least one face landmark feature;
detect, in each image of the set, whether the user **106** is wearing at least one head accessory; and
when it is detected in a given image that the user **106** is wearing at least one head accessory (depicted as a head accessory **108;** shown as a cap with a visor, for illustration purposes only),
   determine a pose of the head accessory **108** in the given image; and
   determine a pose of a head of the user **106** in the given image, based on the position of the at least one face landmark feature detected in the given image and the pose of the head accessory **108** in the given image.

Moreover, the system **100** is implemented in a vehicle. The system **100** further comprises at least one sensor (depicted as sensors **110a, 110b** and **110c)** that are employed to sense at least one of: an acceleration, an orientation of the vehicle. The processor **104** is configured to:
determine a change in the at least one of: the acceleration, the orientation of the vehicle;
detect when the change in the at least one of: the acceleration, the orientation of the vehicle is larger than a predefined threshold; and
when it is detected that the change in the at least one of: the acceleration, the orientation of the vehicle is larger than the predefined threshold, at least temporarily reduce a weightage of the pose of the head accessory **108,** when determining the pose of the head in the given image.

Furthermore, optionally, the system **100** further comprises at least one IR light emitter (depicted as IR light emitters **112)** that is employed to emit IR light (depicted by a dashed arrow). As an example, the tracking camera **102a** may be an IR camera. Optionally, the processor **104** is configured to:
detect, in a given IR image captured using the IR camera (namely, the tracking camera **102a),** a reflection of the IR light off a reflective surface of the head accessory **108,** and determine at least one of: a position, a shape of the reflection; and
determine the pose of the head, based further on the at least one of: the position, the shape of the reflection.

It may be understood by a person skilled in the art that FIG. 1 illustrates a simplified implementation of the system **100,** for the sake of clarity, which should not unduly limit the scope of the claims herein. It is to be understood that the specific implementation of the system **100** is not to be construed as limiting it to specific numbers or types of tracking cameras, processors, head accessories, sensors, and IR light emitters. The person skilled in the art will recognize many variations, alternatives, and modifications of embodiments of the present disclosure.

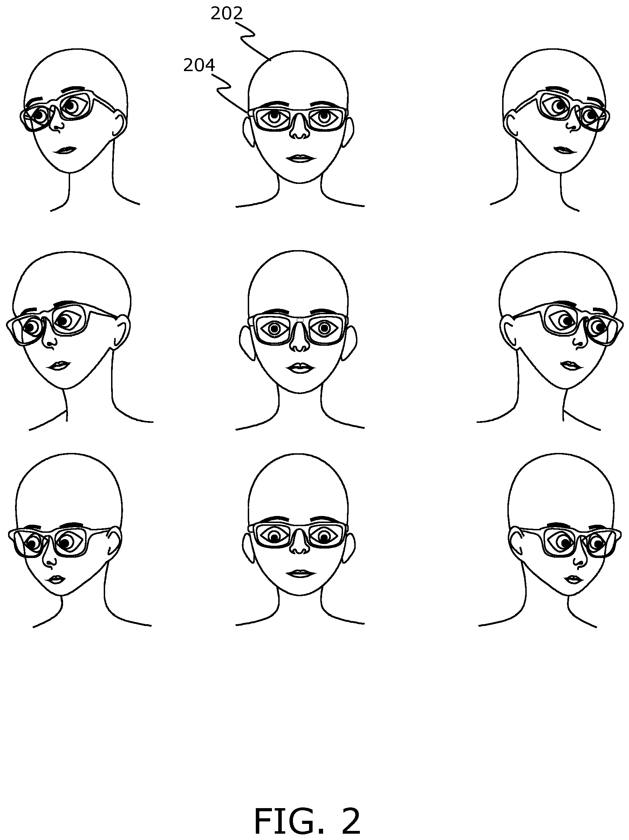

FIG. 2 is a schematic diagram depicting a plurality of poses of a user's head **202** as well as corresponding poses of a head accessory **204** worn by the user. In FIG. 2, the head accessory **204** has been shown as a pair of glasses, for illustration purposes only. The head accessory **204** belongs to a first stability type, which means that the head accessory **204** does not reorient relative to the head **202** of the user, when worn. This is especially true in case of a well-fitting pair of glasses. It is noteworthy that the pose of the head accessory **204** can be determined based on points on a contour of the head accessory **204,** as the head accessory **204** has a well-defined shape. This is apparent from depictions of different poses of the head accessory **204** in FIG. 2. As the head accessory **204** does not reorient relative to the head **202** of the user, a given pose of the user's head **202** can be determined accurately and reliably, based on the pose of the head accessory **204.**

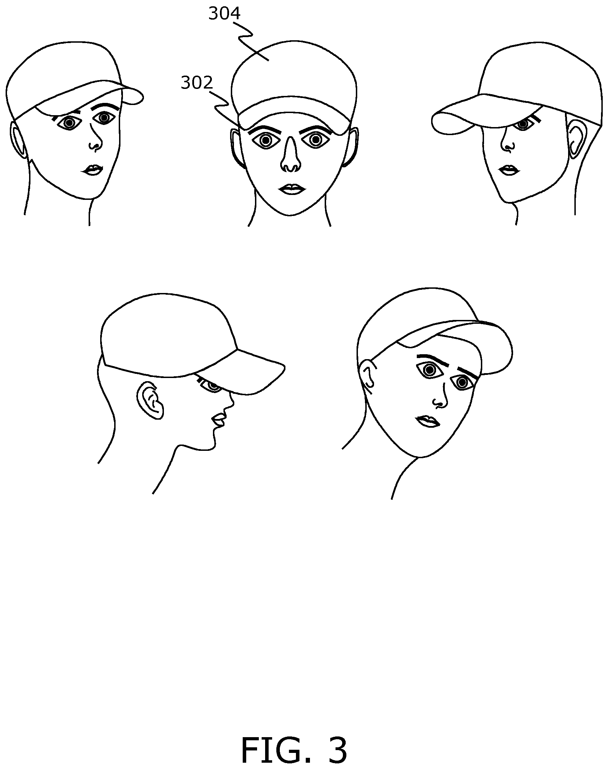

FIG. 3 is another schematic diagram depicting a plurality of poses of a user's head **302** and corresponding poses of another head accessory **304** worn by the user. In FIG. 3, the head accessory **304** has been shown as a cap with a visor, for illustration purposes only. The head accessory **304** belongs to a second stability type, which means that the head accessory **304** does not reorient relative to the head **302** of the user on its own, when worn, but may be adjusted by the user. It is noteworthy that the pose of the head accessory **304** can be determined based on points on a contour of the head accessory **304,** as the head accessory **304** (specifically, the visor) has a well-defined shape. This is apparent from depictions of different poses of the head accessory **304** in FIG. 3. As the head accessory **304** does not reorient relative to the head **302** of the user a majority of time, a given pose of the user's head **302** can be determined accurately and reliably, based on the pose of the head accessory **304.**

FIGs. 2 and 3 are merely examples, which should not unduly limit the scope of the claims herein. A person skilled in the art will recognize many variations, alternatives, and modifications of embodiments of the present disclosure.

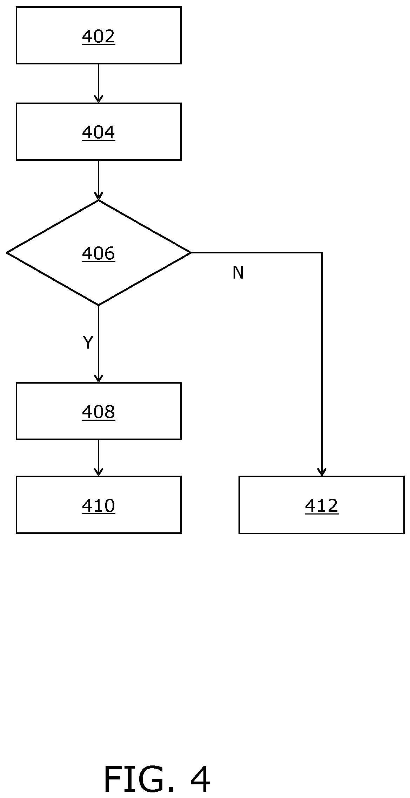

Referring to FIG. 4, illustrated are steps of a method for improving a head pose prediction using a head accessory pose, in accordance with an embodiment of the present disclosure. At step **402,** a set of images of a user are captured during a given time period, by employing at least one tracking camera. At step **404,** at least one face landmark feature of a face of the user is detected in each image of said set, and a position of the at least one face landmark feature is determined. At step **406,** it is detected, in each image of said set, whether the user is wearing at least one head accessory. If, at step **406,** it is detected in a given image that the user is wearing at least one head accessory, step **408** is performed. At step **408,** a pose of the at least one head accessory in the given image is determined. Next, at step **410,** a pose of a head of the user in the given image is determined, based on the position of the at least one face landmark feature detected in the given image and the pose of the at least one head accessory in the given image. Otherwise, if it is detected in the given image that the user is not wearing at least one head accessory, step **412** is performed. At step **412,** the pose of the head of the user in the given image is determined, based on the position of the at least one face landmark feature only.

The aforementioned steps are only illustrative and other alternatives can also be provided where one or more steps are added, one or more steps are removed, or one or more steps are provided in a different sequence without departing from the scope of the claims herein.

## Claims

1. A system (100) implemented in a vehicle, the system comprising:
at least one tracking camera (102a-b) that is employed to capture images of a user (106);
at least one sensor (110a-c) employed to sense at least one of: an acceleration, an orientation of the vehicle; and
at least one processor (104) configured to:
detect, in each image of a set of images captured during a given time period, at least one face landmark feature of a face of the user, and determine a position of the at least one face landmark feature;
detect, in each image of the set, whether the user is wearing at least one head accessory (108, 204, 304); and
when it is detected in a given image that the user is wearing at least one head accessory,
determine a pose of the at least one head accessory in the given image; and
determine a pose of a head (202, 302) of the user in the given image, based on the position of the at least one face landmark feature detected in the given image and the pose of the at least one head accessory in the given image,
further wherein the at least one processor is configured to:
determine a change in the at least one of: the acceleration, the orientation of the vehicle;
detect when the change in the at least one of: the acceleration, the orientation of the vehicle is larger than a predefined threshold; and
when it is detected that the change in the at least one of: the acceleration, the orientation of the vehicle is larger than the predefined threshold, at least temporarily reduce a weightage of the pose of the at least one head accessory, when determining the pose of the head in the given image.

2. The system (100) of claim 1, wherein the at least one processor (104) is configured to:
determine a face-landmark-based pose of the head (202, 302) in each image of the set, based on the position of the at least one face landmark feature detected in said image;
determine, for each image of the set, a mapping between the pose of the at least one head accessory (108, 204, 304) and the face-landmark-based pose of the head;
detect when a change in said mapping across the images of the set is less than a predefined change threshold; and
determine the pose of the head in the given image, based on the position of the at least one face landmark feature detected in the given image and the pose of the at least one head accessory in the given image, only when it is detected that the change in the mapping across the images of the set is less than the predefined change threshold.

3. The system (100) of claim 2, wherein the at least one processor (104) is configured to:
when it is detected that the change in the mapping across the images of the set is not less than the predefined change threshold, perform any one of:
determine the pose of the head (202, 302) in the given image, based only on the position of the at least one face landmark feature detected in the given image, or
reduce a weightage of the pose of the at least one head accessory (108, 204, 304), when determining the pose of the head in the given image.

4. The system (100) of any of the preceding claims, wherein the at least one processor (104) is configured to:
determine a face-landmark-based pose of the head (202, 302) in each image of the set, based on the position of the at least one face landmark feature detected in said image;
determine, for each image of the set, a mapping between the pose of the at least one head accessory (108, 204, 304) and the face-landmark-based pose of the head;
generate a correspondence model based on the mapping determined for each image of the set;
detect when a mapping determined for a next image deviates from the correspondence model by more than a predefined deviation threshold; and
when it is detected that the mapping determined for the next image deviates from the correspondence model by more than the predefined deviation threshold, perform any one of:
determine the pose of the head in the next image, based only on at least one face landmark feature detected in the next image, or
reduce a weightage of the pose of the at least one head accessory, when determining the pose of the head in the next image.

5. The system (100) of any of the preceding claims, wherein the at least one processor (104) is configured to:
when it is detected that the user (106) is wearing the at least one head accessory (108, 204, 304),
identify a type of the at least one head accessory being worn by the user;
determine a list of face landmark features that are likely to be obscured by the at least one head accessory, based on the type of the at least one head accessory; and
adjust, based on the list of face landmark features that are likely to be obscured, a weightage of the at least one face landmark feature, when determining the pose of the head (202, 302) in the given image.

6. The system (100) of any of the preceding claims, wherein the at least one processor (104) is configured to:
detect when no face landmark feature of the face is identifiable in an image, but the user (106) is wearing the at least one head accessory (108, 204, 304); and
when it is detected that no face landmark feature of the face is identifiable in the image, but the user is wearing the at least one head accessory,
determine the pose of the at least one head accessory in the image; and
determine the pose of the head (202, 302) in the image, based on the pose of the at least one head accessory in the image.

7. The system (100) of any of the preceding claims, further comprising at least one infrared (IR) light emitter (112) that is employed to emit IR light, the at least one tracking camera (102a-b) comprising at least one IR camera (102a), wherein the at least one processor (104) is configured to:
detect, in a given IR image captured using the at least one IR camera, a reflection of the IR light off a reflective surface of the at least one head accessory (108, 204, 304), and determine at least one of: a position, a shape of the reflection; and
determine the pose of the head (202, 302), based further on the at least one of: the position, the shape of the reflection.

8. A method comprising:
capturing a set of images of a user (106) during a given time period, by employing at least one tracking camera (102a-b) implemented in a vehicle;
detecting, in each image of said set, at least one face landmark feature of a face of the user, and determining a position of the at least one face landmark feature;
detecting, in each image of said set, whether the user is wearing at least one head accessory (108, 204, 304); and
when it is detected in a given image that the user is wearing at least one head accessory,
determining a pose of the at least one head accessory in the given image; and
determining a pose of a head (202, 302) of the user in the given image, based on the position of the at least one face landmark feature detected in the given image and the pose of the at least one head accessory in the given image,
wherein the method further comprises:
sensing at least one of: an acceleration, an orientation of the vehicle, by employing at least one sensor (110a-c);
determining a change in the at least one of: the acceleration, the orientation of the vehicle;
detecting when the change in the at least one of: the acceleration, the orientation of the vehicle is larger than a predefined threshold; and
when it is detected that the change in the at least one of: the acceleration, the orientation of the vehicle is larger than the predefined threshold, at least temporarily reducing a weightage of the pose of the at least one head accessory, when determining the pose of the head in the given image.

9. The method of claim 8, further comprising:
determining a face-landmark-based pose of the head (202, 302) in each image of the set, based on the position of the at least one face landmark feature detected in said image;
determining, for each image of the set, a mapping between the pose of the at least one head accessory (108, 204, 304) and the face-landmark-based pose of the head;
detecting when a change in said mapping across the images of the set is less than a predefined change threshold; and
determining the pose of the head in the given image, based on the position of the at least one face landmark feature detected in the given image and the pose of the at least one head accessory in the given image, only when it is detected that the change in the mapping across the images of the set is less than the predefined change threshold.

10. The method of claim 9, further comprising:
when it is detected that the change in the mapping across the images of the set is not less than the predefined change threshold, perform any one of:
determining the pose of the head (202, 302) in the given image, based only on the position of the at least one face landmark feature detected in the given image, or
reducing a weightage of the pose of the at least one head accessory (108, 204, 304), when determining the pose of the head in the given image.

11. The method of any of claims 8-10, further comprising:
determining a face-landmark-based pose of the head (202, 302) in each image of the set, based on the position of the at least one face landmark feature detected in said image;
determining, for each image of the set, a mapping between the pose of the at least one head accessory (108, 204, 304) and the face-landmark-based pose of the head;
generating a correspondence model based on the mapping determined for each image of the set;
detecting when a mapping determined for a next image deviates from the correspondence model by more than a predefined deviation threshold; and
when it is detected that the mapping determined for the next image deviates from the correspondence model by more than the predefined deviation threshold, perform any one of:
determining the pose of the head in the next image, based only on at least one face landmark feature detected in the next image, or
reducing a weightage of the pose of the at least one head accessory, when determining the pose of the head in the next image.

12. The method of any of claims 8-11, further comprising:
when it is detected that the user (106) is wearing the at least one head accessory (108, 204, 304),
identifying a type of the at least one head accessory being worn by the user;
determining a list of face landmark features that are likely to be obscured by the at least one head accessory, based on the type of the at least one head accessory; and
adjusting, based on the list of face landmark features that are likely to be obscured, a weightage of the at least one face landmark feature, when determining the pose of the head (202, 302) in the given image.

13. The method of any of claims 8-12, further comprising:
detecting when no face landmark feature of the face is identifiable in an image, but the user (106) is wearing the at least one head accessory (108, 204, 304); and
when it is detected that no face landmark feature of the face is identifiable in the image, but the user is wearing the at least one head accessory,
determining the pose of the at least one head accessory in the image; and
determining the pose of the head (202, 302) in the image, based on the pose of the at least one head accessory in the image.

14. The method of any of claims 8-13, wherein the at least one tracking camera (102a-b) comprises at least one infrared (IR) camera (102a), wherein the method further comprises:
capturing a given IR image using the at least one IR camera, whilst emitting IR light by employing at least one IR light emitter (112);
detecting, in the given IR image, a reflection of the IR light off a reflective surface of the at least one head accessory (108, 204, 304), and determining at least one of: a position, a shape of the reflection; and
determining the pose of the head (202, 302), based further on the at least one of: the position, the shape of the reflection.

## Patentansprüche

1. System (100), das in einem Fahrzeug implementiert ist, das System umfassend:
mindestens eine Verfolgungskamera (102a-b), die verwendet wird, um Bilder eines Benutzers (106) aufzunehmen;
mindestens einen Sensor (110a-c), der verwendet wird, um mindestens eines von Folgendem zu erfassen: eine Beschleunigung, eine Ausrichtung eines Fahrzeugs; und
mindestens einen Prozessor (104), der konfiguriert ist zum:
Erfassen, in jedem Bild eines Satzes von Bildern, die während einer gegebenen Zeitspanne aufgenommen wurden, mindestens eines Gesichtsmarkierungsmerkmals eines Gesichts des Benutzers, und Bestimmen einer Position des mindestens einen Gesichtsmarkierungsmerkmals;
Erfassen, in jedem Bild des Satzes, ob der Benutzer mindestens ein Kopfzubehör (108, 204, 304) trägt; und
wenn in einem gegebenen Bild erkannt wird, dass der Benutzer mindestens ein Kopfzubehörteil trägt,
Bestimmen einer Pose des mindestens einen Kopfzubehörs in dem gegebenen Bild; und
Bestimmen einer Pose eines Kopfes (202, 302) des Benutzers in dem gegebenen Bild basierend auf der Position des in dem gegebenen Bild erkannten mindestens einen Gesichtsmarkierungsmerkmals und der Pose des mindestens einen Kopfzubehörs in dem gegebenen Bild,
Wobei ferner der mindestens eine Prozessor konfiguriert ist zum:
Bestimmen einer Änderung von mindestens einem von: der Beschleunigung, der Ausrichtung des Fahrzeugs;
Erfassen, wenn die Änderung des mindestens einen von: der Beschleunigung, der Ausrichtung des Fahrzeugs größer als ein vorgegebener Schwellenwert ist; und
wenn erfasst wird, dass die Änderung von mindestens einem von: der Beschleunigung, der Ausrichtung des Fahrzeugs größer als der vorgegebene Schwellenwert ist, mindestens vorübergehend Reduzieren einer Gewichtung der Pose des mindestens einen Kopfzubehörs, beim Bestimmen der Pose des Kopfes in dem gegebenen Bild.

2. System (100) nach Anspruch 1, wobei der mindestens eine Prozessor (104) konfiguriert ist zum:
Bestimmen einer auf Gesichtsmarkierungen basierenden Pose des Kopfes (202, 302) in jedem Bild des Satzes, basierend auf der Position der mindestens einen in dem Bild erfassten Gesichtsmarkierung;
Bestimmen, für jedes Bild des Satzes, einer Zuordnung zwischen der Pose des mindestens einen Kopfzubehörs (108, 204, 304) und der auf Gesichtsmarkierungen basierenden Pose des Kopfes;
Erfassen, wenn eine Änderung der Zuordnung über die Bilder des Satzes hinweg kleiner als ein vorgegebener Änderungsschwellenwert ist; und
Bestimmen der Pose des Kopfes in dem Bild basierend auf der Position des mindestens einen in dem gegebenen Bild erfassten Gesichtsmarkierungsmerkmals und der Pose des mindestens einen Kopfzubehörs in dem gegebenen Bild, nur wenn erfasst wird, dass die Änderung der Zuordnung über die Bilder des Satzes hinweg kleiner als der vorgegebene Änderungsschwellenwert ist.

3. System (100) nach Anspruch 2, wobei der mindestens eine Prozessor (104) konfiguriert ist zum:
wenn erfasst wird, dass die Änderung der Zuordnung über die Bilder des Satzes hinweg nicht kleiner als der vorgegebene Änderungsschwellenwert ist, Durchführen eines beliebigen von:
Bestimmen der Pose des Kopfes (202, 302) in dem gegebenen Bild, nur basierend auf der Position des mindestens einen in dem gegebenen Bild erfassten Gesichtsmarkierungsmerkmals, oder
Verringern einer Gewichtung der Pose des mindestens einen Kopfzubehörs (108, 204, 304) beim Bestimmen der Pose des Kopfes in dem gegebenen Bild.

4. System (100) nach einem der vorstehenden Ansprüche, wobei der mindestens eine Prozessor (104) konfiguriert ist zum:
Bestimmen einer auf Gesichtsmarkierungen basierenden Pose des Kopfes (202, 302) in jedem Bild des Satzes, basierend auf der Position der mindestens einen in dem Bild erfassten Gesichtsmarkierung;
Bestimmen, für jedes Bild des Satzes, einer Zuordnung zwischen der Pose des mindestens einen Kopfzubehörs (108, 204, 304) und der auf Gesichtsmarkierungen basierenden Pose des Kopfes;
Erzeugen eines Korrespondenzmodells basierend auf der für jedes Bild des Satzes bestimmten Zuordnung;
Erfassen, wenn eine für ein nächstes Bild ermittelte Zuordnung um mehr als einen vorgegebenen Abweichungsschwellenwert von dem Korrespondenzmodell abweicht; und
wenn erfasst wird, dass die für das nächste Bild bestimmte Zuordnung um mehr als den vorgegebenen Abweichungsschwellenwert von dem Korrespondenzmodell abweicht, Durchführen eines von:
Bestimmen der Pose des Kopfes im nächsten Bild, nur basierend auf mindestens einem im nächsten Bild erfassten Gesichtsmarkierungsmerkmal, oder
Verringern einer Gewichtung der Pose des mindestens einen Kopfzubehörs bei der Bestimmung der Pose des Kopfes im nächsten Bild.

5. System (100) nach einem der vorstehenden Ansprüche, wobei der mindestens eine Prozessor (104) konfiguriert ist zum:
wenn erfasst wird, dass der Benutzer (106) das mindestens eine Kopfzubehör (108, 204, 304) trägt,
Identifizieren einer Art des mindestens einen von dem Benutzer getragenen Kopfzubehörs;
Bestimmen einer Liste von Gesichtsmarkierungsmerkmalen, die wahrscheinlich durch das mindestens eine Kopfzubehör verdeckt werden, basierend auf der Art des mindestens einen Kopfzubehörs; und
Anpassen einer Gewichtung des mindestens einen Gesichtsmarkierungsmerkmals basierend auf der Liste von Gesichtsmarkierungsmerkmalen, die wahrscheinlich verdeckt sind, beim Bestimmen der Pose des Kopfes (202, 302) in dem gegebenen Bild.

6. System (100) nach einem der vorstehenden Ansprüche, wobei der mindestens eine Prozessor (104) konfiguriert ist zum:
Erfassen, wenn kein Gesichtsmarkierungsmerkmal des Gesichts in einem Bild identifizierbar ist, aber der Benutzer (106) das mindestens eine Kopfzubehör (108, 204, 304) trägt; und
wenn erfasst wird, dass kein Gesichtsmarkierungsmerkmal des Gesichts in dem Bild identifizierbar ist, der Benutzer aber das mindestens eine Kopfzubehör trägt,
Bestimmen einer Pose des mindestens einen Kopfzubehörs in dem Bild; und
Bestimmen der Pose des Kopfes (202, 302) in dem Bild basierend auf der Pose des mindestens einen Kopfzubehörs in dem Bild.

7. System (100) nach einem der vorstehenden Ansprüche, ferner umfassend mindestens einen Infrarot-(IR)-Lichtemitter (112), der verwendet wird, um IR-Licht abzugeben, wobei die mindestens eine Verfolgungskamera (102a-b) mindestens eine IR-Kamera (102a) umfasst, wobei der mindestens eine Prozessor (104) konfiguriert ist zum:
Erfassen einer Reflexion des IR-Lichts von einer reflektierenden Oberfläche des mindestens einen Kopfzubehörs (108, 204, 304) in einem gegebenen IR-Bild, das unter Verwendung der mindestens einen IR-Kamera aufgenommen wurde, und Bestimmen von mindestens einem von: einer Position, einer Form der Reflexion; und
Bestimmen der Pose des Kopfes (202, 302), ferner basierend auf mindestens einem von: der Position, der Form der Reflexion.

8. Verfahren, umfassend:
Aufnehmen eines Satzes von Bildern eines Benutzers (106) während einer gegebenen Zeitspanne unter Verwendung mindestens einer in einem Fahrzeug implementierten Verfolgungskamera (102a-b);
Erfassen, in jedem Bild des Satzes, mindestens eines Gesichtsmarkierungsmerkmals eines Gesichts des Benutzers, und Bestimmen einer Position des mindestens einen Gesichtsmarkierungsmerkmals;
Erfassen, in jedem Bild des Satzes, ob der Benutzer mindestens ein Kopfzubehör (108, 204, 304) trägt; und
wenn in einem gegebenen Bild erkannt wird, dass der Benutzer mindestens ein Kopfzubehörteil trägt,
Bestimmen einer Pose des mindestens einen Kopfzubehörs in dem gegebenen Bild; und
Bestimmen einer Pose eines Kopfes (202, 302) des Benutzers in dem gegebenen Bild basierend auf der Position des in dem gegebenen Bild erkannten mindestens einen Gesichtsmarkierungsmerkmals und der Pose des mindestens einen Kopfzubehörs in dem gegebenen Bild,
wobei das Verfahren ferner Folgendes umfasst:
Erfassen mindestens eines von: einer Beschleunigung, einer Ausrichtung des Fahrzeugs, unter Verwendung mindestens eines Sensors (110a-c);
Bestimmen einer Änderung von mindestens einem von: der Beschleunigung, der Ausrichtung des Fahrzeugs;
Erfassen, wenn die Änderung des mindestens einen von: der Beschleunigung, der Ausrichtung des Fahrzeugs größer als ein vorgegebener Schwellenwert ist; und
wenn erfasst wird, dass die Änderung von mindestens einem von: der Beschleunigung, der Ausrichtung des Fahrzeugs größer als der vorgegebene Schwellenwert ist, mindestens vorübergehend Reduzieren einer Gewichtung der Pose des mindestens einen Kopfzubehörs, beim Bestimmen der Pose des Kopfes in dem gegebenen Bild.

9. Verfahren nach Anspruch 8, ferner umfassend:
Bestimmen einer auf Gesichtsmarkierungen basierenden Pose des Kopfes (202, 302) in jedem Bild des Satzes, basierend auf der Position der mindestens einen in dem Bild erfassten Gesichtsmarkierung;
Bestimmen, für jedes Bild des Satzes, einer Zuordnung zwischen der Pose des mindestens einen Kopfzubehörs (108, 204, 304) und der auf Gesichtsmarkierungen basierenden Pose des Kopfes;
Erfassen, wenn eine Änderung der Zuordnung über die Bilder des Satzes hinweg kleiner als ein vorgegebener Änderungsschwellenwert ist; und
Bestimmen der Pose des Kopfes in dem Bild basierend auf der Position des mindestens einen in dem gegebenen Bild erfassten Gesichtsmarkierungsmerkmals und der Pose des mindestens einen Kopfzubehörs in dem gegebenen Bild, nur wenn erfasst wird, dass die Änderung der Zuordnung über die Bilder des Satzes hinweg kleiner als der vorgegebene Änderungsschwellenwert ist.

10. Verfahren nach Anspruch 9, ferner umfassend:
wenn erfasst wird, dass die Änderung der Zuordnung über die Bilder des Satzes hinweg nicht kleiner als der vorgegebene Änderungsschwellenwert ist, Durchführen eines beliebigen von:
Bestimmen der Pose des Kopfes (202, 302) in dem gegebenen Bild, ausschließlich basierend auf der Position des mindestens einen in dem gegebenen Bild erfassten Gesichtsmarkierungsmerkmals, oder
Verringern einer Gewichtung der Pose des mindestens einen Kopfzubehörs (108, 204, 304) beim Bestimmen der Pose des Kopfes in dem gegebenen Bild.

11. Verfahren nach einem der Ansprüche 8 bis 10, ferner umfassend:
Bestimmen einer auf Gesichtsmarkierungen basierenden Pose des Kopfes (202, 302) in jedem Bild des Satzes, basierend auf der Position der mindestens einen in dem Bild erfassten Gesichtsmarkierung;
Bestimmen, für jedes Bild des Satzes, einer Zuordnung zwischen der Pose des mindestens einen Kopfzubehörs (108, 204, 304) und der auf Gesichtsmarkierungen basierenden Pose des Kopfes;
Erzeugen eines Korrespondenzmodells basierend auf der für jedes Bild des Satzes bestimmten Zuordnung;
Erfassen, wenn eine für ein nächstes Bild ermittelte Zuordnung um mehr als einen vorgegebenen Abweichungsschwellenwert von dem Korrespondenzmodell abweicht; und
wenn erfasst wird, dass die für das nächste Bild bestimmte Zuordnung um mehr als den vorgegebenen Abweichungsschwellenwert von dem Korrespondenzmodell abweicht, Durchführen eines von:
Bestimmen der Pose des Kopfes im nächsten Bild, nur basierend auf mindestens einem im nächsten Bild erfassten Gesichtsmarkierungsmerkmal, oder
Verringern einer Gewichtung der Pose des mindestens einen Kopfzubehörs bei der Bestimmung der Pose des Kopfes im nächsten Bild.

12. Verfahren nach einem der Ansprüche 8 bis 11, ferner umfassend:
wenn erfasst wird, dass der Benutzer (106) das mindestens eine Kopfzubehör (108, 204, 304) trägt,
Identifizieren einer Art des mindestens einen von dem Benutzer getragenen Kopfzubehörs;
Bestimmen einer Liste von Gesichtsmarkierungsmerkmalen, die wahrscheinlich durch das mindestens eine Kopfzubehör verdeckt werden, basierend auf der Art des mindestens einen Kopfzubehörs; und
Anpassen einer Gewichtung des mindestens einen Gesichtsmarkierungsmerkmals basierend auf der Liste von Gesichtsmarkierungsmerkmalen, die wahrscheinlich verdeckt sind, beim Bestimmen der Pose des Kopfes (202, 302) in dem gegebenen Bild.

13. Verfahren nach einem der Ansprüche 8 bis 12, ferner umfassend:
Erfassen, wenn kein Gesichtsmarkierungsmerkmal des Gesichts in einem Bild identifizierbar ist, aber der Benutzer (106) das mindestens eine Kopfzubehör (108, 204, 304) trägt; und
wenn erfasst wird, dass kein Gesichtsmarkierungsmerkmal des Gesichts in dem Bild identifizierbar ist, der Benutzer aber das mindestens eine Kopfzubehör trägt,
Bestimmen einer Pose des mindestens einen Kopfzubehörs in dem Bild; und
Bestimmen der Pose des Kopfes (202, 302) in dem Bild basierend auf der Pose des mindestens einen Kopfzubehörs in dem Bild.

14. Verfahren nach einem der Ansprüche 8 bis 13, wobei die mindestens eine Verfolgungskamera (102a-b) mindestens eine Infrarot-(IR)-Kamera (102a) umfasst, wobei das Verfahren ferner Folgendes umfasst:
Aufnehmen eines gegebenen IR-Bildes unter Verwendung der mindestens einen IR-Kamera, während IR-Licht durch Einsatz mindestens eines IR-Lichtemitters (112) emittiert wird;
Erfassen, in dem gegebenen IR-Bild, einer Reflexion des IR-Lichts von einer reflektierenden Oberfläche des mindestens einen Kopfzubehörs (108, 204, 304), und Bestimmen von mindestens einem von: einer Position, einer Form der Reflexion; und
Bestimmen der Pose des Kopfes (202, 302), ferner basierend auf mindestens einem von: der Position, der Form der Reflexion.

## Revendications

1. Système (100) mis en œuvre dans un véhicule, le système comprenant :
au moins une caméra de suivi (102a-b) qui est utilisée pour capturer des images d'un utilisateur (106) ;
au moins un capteur (110a-c) utilisé pour capter au moins l'une parmi : une accélération, une orientation du véhicule ; et
au moins un processeur (104) configuré pour :
détecter, dans chaque image d'un ensemble d'images capturées pendant un laps de temps donné, au moins une caractéristique de repère de visage d'un visage de l'utilisateur, et déterminer une position de l'au moins une caractéristique de repère de visage ;
détecter, dans chaque image de l'ensemble, si l'utilisateur porte au moins un accessoire de tête (108, 204, 304) ; et
lorsqu'il est détecté dans une image donnée que l'utilisateur porte au moins un accessoire de tête,
déterminer une pose de l'au moins un accessoire de tête dans l'image donnée ; et
déterminer une pose d'une tête (202, 302) de l'utilisateur dans l'image donnée, en fonction de la position de l'au moins une caractéristique de repère de visage détectée dans l'image donnée et de la pose de l'au moins un accessoire de tête dans l'image donnée,
en outre dans lequel l'au moins un processeur est configuré pour :
déterminer un changement dans l'au moins une parmi : l'accélération, l'orientation du véhicule ;
détecter lorsque le changement dans l'au moins une parmi : l'accélération, l'orientation du véhicule, est supérieur à un seuil prédéfini ; et
lorsqu'il est détecté que le changement dans l'au moins une parmi : l'accélération, l'orientation du véhicule, est supérieur au seuil prédéfini, réduire au moins temporairement une pondération de la pose de l'au moins un accessoire de tête, lors de la détermination de la pose de la tête dans l'image donnée.

2. Système (100) selon la revendication 1, dans lequel l'au moins un processeur (104) est configuré pour :
déterminer une pose de la tête (202, 302) basée sur un repère de visage dans chaque image de l'ensemble, en fonction de la position de l'au moins une caractéristique de repère de visage détectée dans ladite image ;
déterminer, pour chaque image de l'ensemble, une mise en correspondance entre la pose de l'au moins un accessoire de tête (108, 204, 304) et la pose de la tête basée sur un repère de visage ;
détecter lorsqu'un changement dans ladite mise en correspondance entre les images de l'ensemble est inférieur à un seuil de changement prédéfini ; et
déterminer la pose de la tête dans l'image donnée, en fonction de la position de l'au moins une caractéristique de repère de visage détectée dans l'image donnée et de la pose de l'au moins un accessoire de tête dans l'image donnée, uniquement lorsqu'il est détecté que le changement dans la mise en correspondance entre les images de l'ensemble est inférieur au seuil de changement prédéfini.

3. Système (100) selon la revendication 2, dans lequel l'au moins un processeur (104) est configuré pour :
lorsqu'il est détecté que le changement dans la mise en correspondance entre les images de l'ensemble n'est pas inférieur au seuil de changement prédéfini, effectuer l'un quelconque parmi :
déterminer la pose de la tête (202, 302) dans l'image donnée, en fonction uniquement de la position de l'au moins une caractéristique de repère de visage détectée dans l'image donnée, ou
réduire une pondération de la pose de l'au moins un accessoire de tête (108, 204, 304), lors de la détermination de la pose de la tête dans l'image donnée.

4. Système (100) selon l'une quelconque des revendications précédentes, dans lequel l'au moins un processeur (104) est configuré pour :
déterminer une pose de la tête (202, 302) basée sur un repère de visage dans chaque image de l'ensemble, en fonction de la position de l'au moins une caractéristique de repère de visage détectée dans ladite image ;
déterminer, pour chaque image de l'ensemble, une mise en correspondance entre la pose de l'au moins un accessoire de tête (108, 204, 304) et la pose de la tête basée sur un repère de visage ;
générer un modèle de correspondance en fonction de la mise en correspondance déterminée pour chaque image de l'ensemble ;
détecter le moment où une mise en correspondance déterminée pour une image suivante s'écarte du modèle de correspondance de plus d'un seuil d'écart prédéfini ; et
lorsqu'il est détecté que la mise en correspondance déterminée pour l'image suivante s'écarte du modèle de correspondance de plus que le seuil d'écart prédéfini, effectuer l'un quelconque parmi :
déterminer la pose de la tête dans l'image suivante, en fonction uniquement d'au moins une caractéristique de repère de visage détectée dans l'image suivante, ou
réduire une pondération de la pose de l'au moins un accessoire de tête, lors de la détermination de la pose de la tête dans l'image suivante.

5. Système (100) selon l'une quelconque des revendications précédentes, dans lequel l'au moins un processeur (104) est configuré pour :
lorsqu'il est détecté que l'utilisateur (106) porte l'au moins un accessoire de tête (108, 204, 304),
identifier un type de l'au moins un accessoire de tête porté par l'utilisateur ;
déterminer une liste de caractéristiques de repère de visage qui sont susceptibles d'être masquées par l'au moins un accessoire de tête, en fonction du type de l'au moins un accessoire de tête ; et
ajuster, en fonction de la liste de caractéristiques de repère de visage qui sont susceptibles d'être masquées, une pondération de l'au moins une caractéristique de repère de visage, lors de la détermination de la pose de la tête (202, 302) dans l'image donnée.

6. Système (100) selon l'une quelconque des revendications précédentes, dans lequel l'au moins un processeur (104) est configuré pour :
détecter lorsqu'aucune caractéristique de repère de visage du visage n'est identifiable dans une image, mais que l'utilisateur (106) porte l'au moins un accessoire de tête (108, 204, 304) ; et
lorsqu'il est détecté qu'aucune caractéristique de repère de visage du visage n'est identifiable dans l'image, mais que l'utilisateur porte l'au moins un accessoire de tête,
déterminer la pose de l'au moins un accessoire de tête dans l'image ; et
déterminer la pose de la tête (202, 302) dans l'image, en fonction de la pose de l'au moins un accessoire de tête dans l'image.

7. Système (100) selon l'une quelconque des revendications précédentes, comprenant en outre au moins un émetteur de lumière infrarouge (IR) (112) qui est utilisé pour émettre de la lumière IR, l'au moins une caméra de suivi (102a-b) comprenant au moins une caméra IR (102a), dans lequel l'au moins un processeur (104) est configuré pour :
détecter, dans une image IR donnée capturée à l'aide de l'au moins une caméra IR, une réflexion de la lumière IR sur une surface réfléchissante de l'au moins un accessoire de tête (108, 204, 304), et déterminer au moins l'une parmi : une position, une forme de la réflexion ; et
déterminer la pose de la tête (202, 302), en fonction en outre de l'au moins une parmi : la position, la forme de la réflexion.

8. Procédé comprenant :
la capture d'un ensemble d'images d'un utilisateur (106) pendant un laps de temps donné, en utilisant au moins une caméra de suivi (102a-b) mise en œuvre dans un véhicule ;
la détection, dans chaque image dudit ensemble, d'au moins une caractéristique de repère de visage d'un visage de l'utilisateur, et la détermination d'une position de l'au moins une caractéristique de repère de visage ;
le fait de détecter, dans chaque image dudit ensemble, si l'utilisateur porte au moins un accessoire de tête (108, 204, 304) ; et
lorsqu'il est détecté dans une image donnée que l'utilisateur porte au moins un accessoire de tête,
la détermination d'une pose de l'au moins un accessoire de tête dans l'image donnée ; et
la détermination d'une pose d'une tête (202, 302) de l'utilisateur dans l'image donnée, en fonction de la position de l'au moins une caractéristique de repère de visage détectée dans l'image donnée et de la pose de l'au moins un accessoire de tête dans l'image donnée,
dans lequel le procédé comprend en outre :
la détection d'au moins l'une parmi : une accélération, une orientation du véhicule, en utilisant au moins un capteur (110a à c) ;
la détermination d'un changement dans l'au moins une parmi : l'accélération, l'orientation du véhicule ;
le fait de détecter lorsque le changement dans l'au moins une parmi : l'accélération, l'orientation du véhicule, est supérieur à un seuil prédéfini ; et
lorsqu'il est détecté que le changement dans l'au moins une parmi : l'accélération, l'orientation du véhicule, est supérieur au seuil prédéfini, la réduction au moins temporaire d'une pondération de la pose de l'au moins un accessoire de tête, lors de la détermination de la pose de la tête dans l'image donnée.

9. Procédé selon la revendication 8, comprenant en outre :
la détermination d'une pose de la tête (202, 302) basée sur un repère de visage dans chaque image de l'ensemble, en fonction de la position de l'au moins une caractéristique de repère de visage détectée dans ladite image ;
la détermination, pour chaque image de l'ensemble, d'une mise en correspondance entre la pose de l'au moins un accessoire de tête (108, 204, 304) et la pose de la tête basée sur un repère de visage ;
le fait de détecter lorsqu'un changement dans ladite mise en correspondance entre les images de l'ensemble est inférieur à un seuil de changement prédéfini ; et
la détermination de la pose de la tête dans l'image donnée, en fonction de la position de l'au moins une caractéristique de repère de visage détectée dans l'image donnée et de la pose de l'au moins un accessoire de tête dans l'image donnée, uniquement lorsqu'il est détecté que le changement dans la mise en correspondance entre les images de l'ensemble est inférieur au seuil de changement prédéfini.

10. Procédé selon la revendication 9, comprenant en outre :
lorsqu'il est détecté que le changement dans la mise en correspondance entre les images de l'ensemble n'est pas inférieur au seuil de changement prédéfini, la réalisation de l'un quelconque parmi :
la détermination de la pose de la tête (202, 302) dans l'image donnée, en fonction uniquement de la position de l'au moins une caractéristique de repère de visage détectée dans l'image donnée, ou
la réduction d'une pondération de la pose de l'au moins un accessoire de tête (108, 204, 304), lors de la détermination de la pose de la tête dans l'image donnée.

11. Procédé selon l'une quelconque des revendications 8 à 10, comprenant en outre :
la détermination d'une pose de la tête (202, 302) basée sur un repère de visage dans chaque image de l'ensemble, en fonction de la position de l'au moins une caractéristique de repère de visage détectée dans ladite image ;
la détermination, pour chaque image de l'ensemble, d'une mise en correspondance entre la pose de l'au moins un accessoire de tête (108, 204, 304) et la pose de la tête basée sur un repère de visage ;
la génération d'un modèle de correspondance en fonction de la mise en correspondance déterminée pour chaque image de l'ensemble ;
le fait de détecter le moment où une mise en correspondance déterminée pour une image suivante s'écarte du modèle de correspondance de plus d'un seuil d'écart prédéfini ; et
lorsqu'il est détecté que la mise en correspondance déterminée pour l'image suivante s'écarte du modèle de correspondance de plus que le seuil d'écart prédéfini, la réalisation de l'un quelconque parmi :
la détermination de la pose de la tête dans l'image suivante, en fonction uniquement d'au moins une caractéristique de repère de visage détectée dans l'image suivante, ou
la réduction d'une pondération de la pose de l'au moins un accessoire de tête, lors de la détermination de la pose de la tête dans l'image suivante.

12. Procédé selon l'une quelconque des revendications 8 à 11, comprenant en outre :
lorsqu'il est détecté que l'utilisateur (106) porte l'au moins un accessoire de tête (108, 204, 304),
l'identification d'un type de l'au moins un accessoire de tête porté par l'utilisateur ;
la détermination d'une une liste de caractéristiques de repère de visage qui sont susceptibles d'être masquées par l'au moins un accessoire de tête, en fonction du type de l'au moins un accessoire de tête ; et
l'ajustement, en fonction de la liste de caractéristiques de repère de visage qui sont susceptibles d'être masquées, d'une pondération de l'au moins une caractéristique de repère de visage, lors de la détermination de la pose de la tête (202, 302) dans l'image donnée.

13. Procédé selon l'une quelconque des revendications 8 à 12, comprenant en outre :
le fait de détecter lorsqu'aucune caractéristique de repère de visage du visage n'est identifiable dans une image, mais que l'utilisateur (106) porte l'au moins un accessoire de tête (108, 204, 304) ; et
lorsqu'il est détecté qu'aucune caractéristique de repère de visage du visage n'est identifiable dans l'image, mais que l'utilisateur porte l'au moins un accessoire de tête,
la détermination de la pose de l'au moins un accessoire de tête dans l'image ; et
la détermination de la pose de la tête (202, 302) dans l'image, en fonction de la pose de l'au moins un accessoire de tête dans l'image.

14. Procédé selon l'une quelconque des revendications 8 à 13, dans lequel l'au moins une caméra de suivi (102a-b) comprend au moins une caméra infrarouge (IR) (102a), dans lequel le procédé comprend en outre :
la capture d'une image IR donnée à l'aide de l'au moins une caméra IR, tout en émettant de la lumière IR en utilisant au moins un émetteur de lumière IR (112) ;
la détection, dans l'image IR donnée, d'une réflexion de la lumière IR sur une surface réfléchissante de l'au moins un accessoire de tête (108, 204, 304), et la détermination d'au moins l'une parmi : une position, une forme de la réflexion ; et
la détermination de la pose de la tête (202, 302), en fonction en outre de l'au moins une parmi : la position, la forme de la réflexion.
